Europäisches Patentamt

European Patent Office

Office européen des brevets

(11) Veröffentlichungsnummer: **0 212 408**
**A2**

(12) **EUROPÄISCHE PATENTANMELDUNG**

(21) Anmeldenummer: 86110731.6

(51) Int. Cl.⁴: **B23Q 11/08**

(22) Anmeldetag: 04.08.86

(30) Priorität: 30.08.85 DE 3531140

(43) Veröffentlichungstag der Anmeldung:
04.03.87 Patentblatt 87/10

(84) Benannte Vertragsstaaten:
AT BE CH DE FR GB IT LI NL SE

(71) Anmelder: **Traub AG**
**Ulmer Strasse 49-55**
**D-7313 Reichenbach/Fils(DE)**

(72) Erfinder: **Pflüger, Helmut**
**Rechbergstrasse 11**
**D-7061 Lichtenwald(DE)**
Erfinder: **Sonnek, Werner**
**Brunnenwiesenweg 33**
**D-7061 Lichtenwald(DE)**

(74) Vertreter: **Wuesthoff, Franz, Dr.-Ing. et al**
**Patentanwälte Wuesthoff -v.**
**Pechmann-Behrens-Goetz Schweigerstrasse**
**2**
**D-8000 München 90(DE)**

(54) **Abdeckung für parallele Führungen, insbesondere an Werkzeugmaschinen.**

(57) Jeder von zwei oder mehr parallelen Führungen (12, 14) sind mindestens zwei teleskopartig ineinandergreifende Abdeckelemente (20, 22 bzw. 30, 32, 34) zugeordnet, die unabhängig von den Abdeckelementen der oder jeder anderen Führung gegeneinander verschiebbar sind. Die Abdeckelemente (20, 22) einer ersten Führung (12) von zwei benachbarten Führungen (12, 14) weisen längs ihres der zweiten - (14) dieser Führungen zugewandten Randes je eine elastische Schürze (26) auf, die auf den Abdeckelementen (30, 32, 34) der zweiten Führung (14) gleitend aufliegt. Auf diese Weise wird zusätzlich zu den Führungen (12, 14) auch der bzw. jeder Zwischenraum zwischen Ihnen abgedeckt, wobei aber die unabhängige Beweglichkeit der den verschiedenen Führungen (12, 14) zugeordneten Abdeckelemente (20, 22 bzw. 30, 32, 34) erhalten bleibt.

FIG. 1

## Abdeckung für parallele Führungen, insbesondere an Werkzeugmaschinen

Die Erfindung betrifft eine Abdeckung für parallele Führungen, insbesondere an Werkzeugmaschinen, bei der jeder Führung mindestens zwei teleskopartig ineinandergreifende Abdeckelemente zugeordnet sind, die unabhängig von den Abdeckelementen der oder jeder anderen Führung gegeneinander verschiebbar sind.

Im Zusammenhang mit der Gattung von Abdeckungen, auf die sich die Erfindung bezieht, sind unter Führungen beliebige Gleit-oder Rollenführungsbahnen zu verstehen, wie sie vor allem bei spangebenden Werkzeugmaschinen üblich sind. Gattungsgemäße Abdeckungen haben die Aufgabe, die zugeordneten Führungen vor Beschädigung und Verschmutzung zu bewahren und/oder im Bereich solcher Führungen arbeitende Personen vor Unfällen zu schützen.

Nicht selten sind zwei oder mehr Führungen, die unabhängig voneinander eines solches Schutzes bedürfen, in geringem Abstand parallel zueinander angeordnet. Als Beispiele für solche Anordnungen seien Walzenschleifmaschinen und Drehmaschinen genannt, die für einen Reitstockschlitten und mindestens einen Werkzeugschlitten je eine Führung aufweisen. Die verschiedenen Schlitten sind unabhängig voneinander längs ihrer Führung beweglich, sodaß auch die beweglichen Abdeckelemente jeder Führung unabhängig von den Abdeckelementen jeder anderen Führung verschiebbar sein müssen. Dieser Bedingung hat man bisher dadurch entsprochen, daß man den einzelnen parallelen Führungen vollständig getrennte, mit Abstand nebeneinander angeordnete Abdeckungen zugeordnet hat. Dabei läßt sich jedoch nicht ausschließen, daß Schmutz in die Zwischenräume zwischen den Abdeckungen benachbarter Führungen gelangt und von dort aus allmählich doch die Führungen erreicht. Enge Zwischenräume bedeuten außerdem zumindest bei begehbaren Abdeckungen eine Unfallgefahr.

Der Erfindung liegt deshalb die Aufgabe zugrunde, eine Abdeckung der eingangs beschriebenen Gattung derart zu gestalten, daß sie zwei oder mehr Führungen einschließlich der zwischen ihnen bestehenden Zwischenräume abdeckt ohne die auf diesen Führungen angeordneten beweglichen Bauteile, beispielsweise Maschinenschlitten, an voneinander unabhängigen Bewegungen zu hindern.

Die Aufgabe ist erfindungsgemäß dadurch gelöst, daß die Abdeckelemente einer ersten von zwei benachbarten Führungen längs ihres der zweiten dieser Führungen zugewandten Randes je eine elastische Schürze aufweisen, die auf den Abdeckelementen der zweiten Führung gleitend aufliegt.

Bei einer besonders zweckmäßigen Ausführungsform der Erfindung weist jedes Abdeckelement der zweiten Führung, in das ein anderes Abdeckelement der selben Führung eingreift, eine Rampe auf, die über dieses andere Abdeckelement und unter die Schürze mindestens eines Abdeckelements der ersten Führung greift.

Dabei ist es ferner vorteilhaft, wenn die Rampen eine Steigung haben, die der Form angepaßt ist, welche die elastischen Schürzen am Übergang zwischen zwei unmittelbar ineinandergreifenden Abdeckelementen der zweiten Führung von sich aus annehmen.

Ein Ausführungsbeispiel der Erfindung wird im folgenden anhand schematischer Zeichnungen mit weiteren Einzelheiten erläutert. Es zeigt:

Fig. 1 eine Schrägansicht einer Führunganordnung einer Drehmaschine und

Fig. 2 den Teilschnitt II-II in Fig. 1.

Die dargestellte Führungsanordnung hat drei auf einer gemeinsamen Grundplatte 10 angeordnete Führungen, nämlich eine mittlere Führung 12 und zwei seitliche Führungen 14. Die beiden seitlichen Führungen 14 und die ihnen unmittelbar zugeordneten, im folgenden beschriebenen Bauteile entsprechen einander und sind deshalb mit gleichen Bezugszeichen versehen.

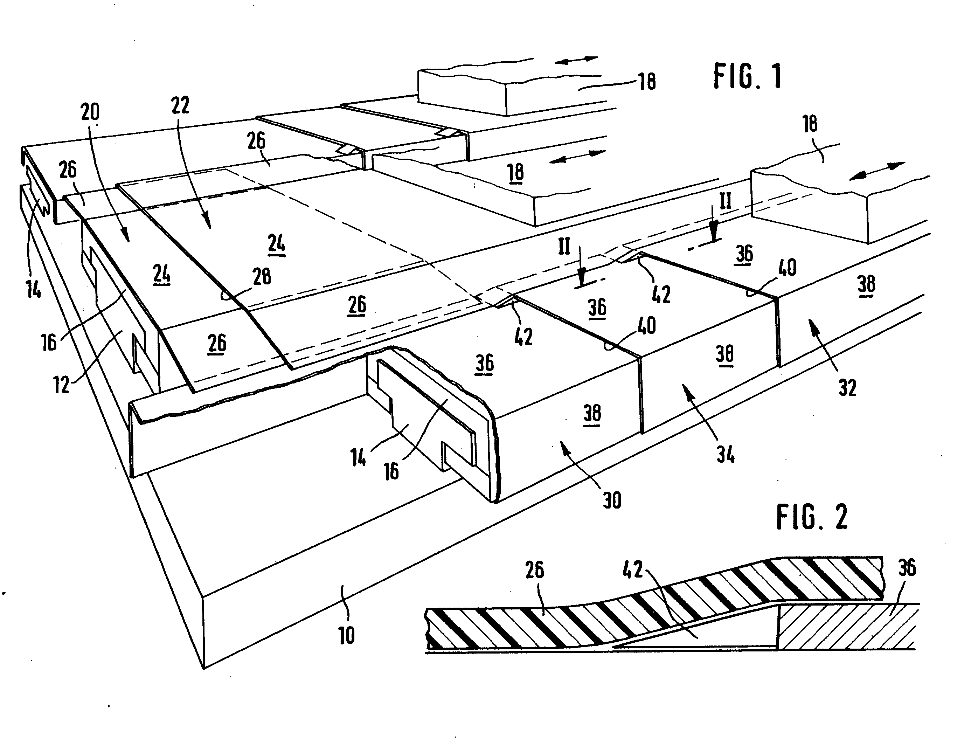

An dem in Fig. 1 dem Betrachter zugewandten Ende jeder der Führungen 12 und 14 ist ein Endstück 16 befestigt; ein entsprechendes Endstück ist auch an dem anderen, nicht dargestellten Ende jeder Führung befestigt. Zwischen den Endstücken 16 ist auf jeder der Führungen 12 und 14 ein Schlitten 18 verschiebbar. Der Schlitten 18 auf der mittleren Führung 12 ist beispielsweise ein Reitstockschlitten, während die Schlitten 18 auf den beiden seitlichen Führungen 14 Revolverschlitten sein können.

An den Endstücken 16 der mittleren Führung 12 ist je ein ortsfestes Abdeckelement 20 befestigt; von diesen Abdeckelementen ist nur das in Fig. 1 dem Betrachter zugewandte dargestellt. Am zugehörigen Schlitten 18 ist ein bewegliches Abdeckelement 22 befestigt, das teleskopartig über jedes der beiden ortsfesten Abdeckelemente 20 greift.

Jedes der Abdeckelemente 20 und 22 ist einstückig aus Federstahlblech hergestellt und hat ein starres Mittelteil 24 sowie zwei seitliche Schürzen 26. Die Schürzen 26 oder deren untere Ränder können auch aus gummiartig elastischem Kunststoff bestehen. Die Mittelteile 24 sind der Einfachheit halber als ebene Platten dargestellt, können aber in üblicher Weise zur Versteifung abgekantet sein. Das Mittelteil 24 des beweglichen Abdeckelements 22 kann an seinen freien Rändern je einen Abstreifer 28 aufweisen, der Späne, Schneidimulsionen und dergl. daran hindert, zwischen die Abdeckelemente 20 und 22 einzudringen.

An jedem Endstück 16 der beiden seitlichen Führungen 14, ist ein ortsfestes Abdeckelement 30 befestigt, während am zugehörigen Schlitten 18 ein zusammen mit diesem verschiebbares Abdeckelement 32 befestigt ist. Zwischen jedem ortsfesten Abdeckelement 30 und dem zugehörigen verschiebbaren Abdeckelement 32 ist ein weiteres Abdeckelement 34 angeordnet, das gegenüber beiden Abdeckelementen 30 und 32 verschiebbar ist, das Abdeckelement 30 übergreift und in das Abdeckelement 32 eingreift.

Die Abdeckelemente 30, 32 und 34 sind in bekannter Weise aus Stahlblech hergestellt und kastenförmig mit je einem Oberteil 36 und je zwei nach unten abgekanteten Seitenwänden 38 gestaltet. Die Abdeckelemente 32 und 34 weisen an ihren Vorderkanten, die das nächstkleinere Abdeckelement 34 bzw. 30 übergreifen, je einen Abstreifer 40 auf, der am Oberteil 36 und an den Seitenwänden 38 befestigt ist und an den entsprechenden Teilen des nächskleineren Abdeckelements 34 bzw. 30 gleitend aufliegt.

Die federnd elastischen Schürzen 26 jedes der Abdeckelemente 20 und 22 liegen mit ihrem vom zugehörigen Mittelteil 24 abgewandten Rand auf den Oberteilen 36 der Abdeckele mente 30, 32 und 34 der benachbarten Führungen 14 auf. Somit überbrücken die Schürzen 26 die Zwischenräume zwischen der mittleren Führung 12 und jeder der beiden seitlichen Führungen 14, wodurch Verschmutzungs-und Unfallgefahren gebannt sind.

Dem stufenartigen Übergang zwischen unmittelbar ineinandergreifenden Abdeckelementen 30 und 34 oder 34 und 32 können sich die Schürzen 26 allerdings nicht vollständig anpassen. Um zu vermeiden, daß an diesen Übergängen seitliche Öffnungen freibleiben, durch die doch noch geringe Schmutzmengen unter die Schürzen 26 eindringen könnten, ist an den Oberteilen 36 jedes der Abdeckelemente 32 und 34 in dem Bereich, in dem diese Oberteile von den Schürzen 26 berührt werden, je eine Rampe 42 angeordnet.

Die Rampen 42 haben, wie besonders aus Fig. 2 ersichtlich ist, ein annähernd dreieckiges Profil, das der Form angepaßt ist, welche die Schürzen 26 am Übergang zwischen zwei unmitelbar ineinandergreifenden Abdeckelementen 30 und 34 oder 34 und 32 von sich aus annehmen. Jede der Rampen 42 verschließt den Zwischenraum zwischen der auf ihr liegenden Schürze 26 und dem darunterliegenden Oberteil 36 zumindest annähernd vollständig.

## Ansprüche

1. Abdeckung für parallele Führungen (12, 14), insbesondere an Werkzeugmaschinen, bei der jeder Führung (12, 14) mindestens zwei teleskopartig ineinandergreifende Abdeckelemente (20, 22 bzw. 30, 32, 34) zugeordnet sind, die unabhängig von den Abdeckelementen der oder jeder anderen Führung gegeneinander verschiebbar sind,

dadurch**gekennzeichnet**, daß die Abdeckelemente (20, 22) einer ersten (12) von zwei benachbarten Führungen (12, 14) längs ihres der zweiten (14) dieser Führungen zugewandten Randes je eine elastische Schürze (26) aufweisen, die auf den Abdeckelementen (30, 32, 34) der zweiten Führung (14) gleitend aufliegt.

2. Abdeckung nach Anspruch 1,

dadurch **gekennzeichnet**, daß jedes Abdeckelement (32, 34) der zweiten Führung (14), in das ein anderes Abdeckelement (34 bzw. 30) der selben Führung (14) eingreift, eine Rampe (42) aufweist, die über dieses andere Abdeckelement und unter die Schürze (26) mindestens eines Abdeckelements (20, 22) der ersten Führung (12) greift.

3. Abdeckung nach Anspruch 2,

dadurch **gekennzeichnet**, daß die Rampen (42) eine Steigung haben, die der Form angepaßt ist, welche die elastischen Schürzen (26) am Übergang zwischen zwei unmittelbar ineinandergreifenden Abdeckelementen (30, 34 bzw. 34, 32) der zweiten Führung (14) von sich aus annehmen.

FIG. 1

FIG. 2

0 212 408

Traub AG
EP-60 385